# EUROPÄISCHE PATENTSCHRIFT

(11) **EP 1 480 859 B1**
(45) Veröffentlichungstag und Bekanntmachung des Hinweises auf die Patenterteilung: **26.07.2006**
(21) Anmeldenummer: 02776694.8
(22) Anmeldetag: 20.09.2002
(51) Int. Cl.: B60S 1/24

(54) **SCHEIBENWISCHVORRICHTUNG, INSBESONDERE FÜR EIN KRAFTFAHRZEUG**
WINDSCREEN WIPER DEVICE, IN PARTICULAR FOR A MOTOR VEHICLE
DISPOSITIF D'ESSUIE-GLACE, EN PARTICULIER POUR VEHICULE A MOTEUR

(30) Priorität: 15.02.2002 DE 10206628
(43) Veröffentlichungstag der Anmeldung: 01.12.2004
(73) Patentinhaber: ROBERT BOSCH GMBH, 70442 Stuttgart (DE)
(72) Erfinder: KRAUS, Achim, 77815 Buehl (DE); GHARBI, Sofiene, 76137 Karlsruhe (DE)
(86) Internationale Anmeldenummer: PCT/DE2002/003541
(87) Internationale Veröffentlichungsnummer: WO 2003/072406

(56) Entgegenhaltungen:
- WO-A-02/06098
- FR-A- 2 724 616
- GB-A- 813 566
- US-A- 2 046 108
- US-B1- 6 240 593

## Beschreibung

### Stand der Technik

Die Erfindung betrifft eine Scheibenwischvorrichtung, insbesondere für ein Kraftfahrzeug nach Gattung des unabhängigen Anspruchs.

Aus der DE 100 34 041 A1 ist eine Scheibenwischvorrichtung bekannt, bei der ein Wischerarm, einschließlich der zugehörigen Lagerung, an einem Wischerteil befestigt ist, welches von einer verschwenkbaren Heckscheibe getragen wird. Ein Antriebsteil mit einem Elektromotor ist stationär mit der Karosserie verbunden und weist ein topfförmiges erstes Kupplungsteil auf, welches mit einem zweiten Kupplungsteil in Wirkverbindung bringbar ist. Das zweite Kupplungsteil ist fest und konzentrisch mit der Wischerwelle verbunden, die den Wischerarm mit dem Wischblatt trägt. Die Wischerwelle ist im Wischerteil federnd gelagert, welches an der Heckscheibe eines Kraftfahrzeugs befestigt ist.

Aus der DE 10008238 ist der Oberbegriff des Anspruchs 1 bekannt.

### Vorteile der Erfindung

Die erfindungsgemäße Scheibenwischvorrichtung mit dem Merkmal des Hauptanspruchs hat den Vorteil, wenn die Wischerwelle in axialer Richtung federelastisch gelagert ist, dass die Wischerwelle ohnehin eine stabile Lagerung in radialer Richtung aufweist, um so auf eine Lagerung des zweiten Kupplungsteils verzichtet werden kann.

Weiterhin vorteilhaft ist es, wenn das zweite Kupplungsteil selbst als im wesentlichen starres Element ausgebildet ist, um ein maximales Drehmoment auf die Wischerwelle zu übertragen.

Darüber hinaus ist es vorteilhaft, wenn das zweite Kupplungsteil in das erste Kupplungsteil einzudringen, insbesondere das ersten Kupplungsteil zu durchdringen vermag. Es ergibt sich so eine formschlüssige Verbindung zwischen ersten und zweiten Kupplungsteil, so dass maximale Drehmomente vom Antriebsteil auf die Wischerwelle übertragen werden.

Besonders vorteilhaft ist, wenn das erste Kupplungsteil als Lochscheibe ausgebildet ist. Diese ist einfach und kostengünstig herzustellen.

Weiterhin vorteilhaft ist es, wenn das erste und zweite Kupplungsteil () durch Drehung des ersten Kupplungsteils () gegen das zweite Kupplungsteil () in Eingriff bringbar sind. In Praxis bedeutet dies, dass die Kupplung sich somit selbst einkuppelt, wenn das zweite Kupplungsteil, das starr mit der Wischerwelle verbunden ist, sich im ausgekuppelten Zustand verdreht hat, also der Wischer im ausgekuppelter Position verdreht wurde.

Weiterhin ist es als vorteilhaft anzusehen, wenn das Antriebsteil zum Antrieb der Wischerwelle dient und sich selbst mit der Wischerwelle in Wirkverbindung zu bringen vermag. Auf diese Weise vermag sich die Kupplung beim Start des Antriebsteils selbst einzukuppeln.

Besonders vorteilhaft ist es, wenn das Antriebsteil einen elektrischen Motor, insbesondere einen Reversiermotor aufweist.

Darüber hinaus ist es von Vorteil, wenn das Antriebsteil an einer Heckklappe und das Wischerteil an einer Heckscheibe des Kraftfahrzeugs befestigbar sind.

### Zeichnungen

Ein Ausführungsbeispiel der Erfindung ist in den Zeichnungen dargestellt und in der nachfolgenden Beschreibung näher erläutert.

### Es zeigen:

Figur 1, eine erfindungsgemäße Scheibenwischvorrichtung in perspektivischer Darstellung und
Figur 2, das Wischerteil einer erfindungsgemäßen Scheibenwischvorrichtung in einer Seitenansicht.

### Beschreibung des Ausführungsbeispiels

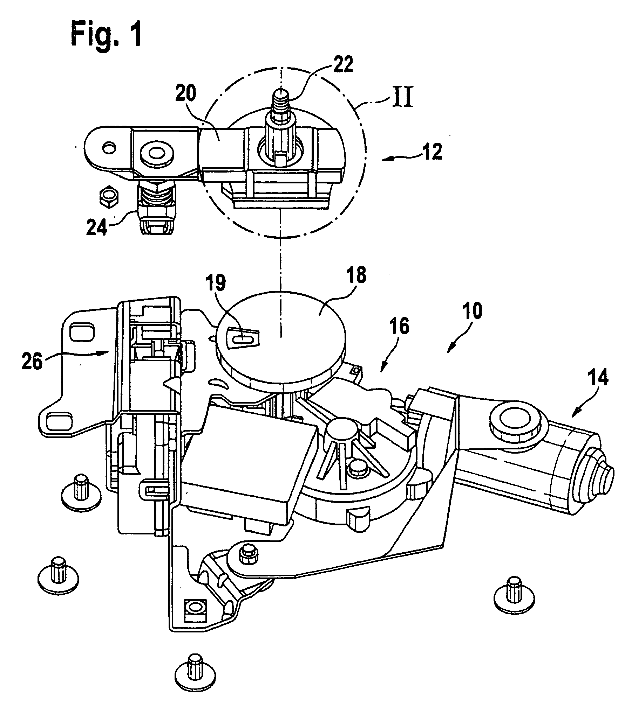

In Figur 1 ist eine erfindungsgemäße Scheibenwischvorrichtung in perspektivischer Darstellung gezeigt. Sie weist im wesentlichen ein Antriebsteil 10 und ein Wischerteil 12 auf. Das Antriebsteil 10 besteht aus einem Elektromotor 14, der als Reversiermotor oder als Umlaufender Elektromotor ausgebildet sein kann. Dieser ist mit einem Getriebe 16, welches beispielsweise als Schneckengetriebe ausgebildet ist, verbunden. Das vom Elektromotor 14 abgegebene Drehmoment wird durch das Getriebe 16 an ein erstes Kupplungsteil 18 vermittelt, welches als Lochscheibe ausgebildet ist. Die Lochscheibe 18 ist von im wesentlichen kreisscheibenförmiger Gestalt und weist exzentrisch zu ihrer Drehachse eine längliche Öffnung 19 auf.

Das Wischerteil 12 besteht im wesentlichen aus einem Halter 20, in dem eine Wischerwelle 22 gelagert ist. An Halter 20 ist weiterhin ein Verschlußteil 24 parallel zur Wischerwelle 22 angeordnet, welches mit einem Schloß 26, das am Antriebsteil 10 angeordnet ist, zusammenwirkt.

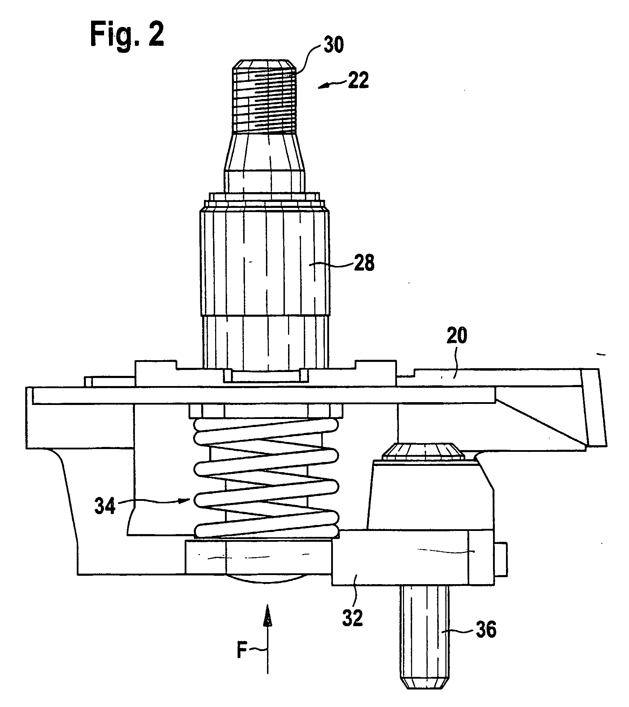

In Figur 2 ist ein detaillierter Ausschnitt des Wischerteils 12 aus Figur 1 gezeigt. Die Wischerwelle 22 ist in einem Lager 28, das am Halter 20 befestigt ist, oder einstückig mit diesem ausgebildet ist, gelagert. An einem Ende ist die Wischerwelle komisch verjüngt und weist einen Gewindeabschnitt 30 auf, so dass an dieser Aussenseite ein hier nicht gezeigter Wischerarm mit der Wischerwelle 22 drehfest verbunden werden kann.

Am anderen Ende ist die Wischerwelle 22 drehfest mit einer Brücke 32 verbunden, die auch als Kreisscheibe ausgebildet sein kann. Auf der Wischerwelle 22 ist konzentrisch eine Druckfeder 34 angeordnet, die sich zwischen Halter 20 und Brücke 32 derart abstützt, dass bei Ausübung einer Kraft F auf die Brücke 32 und damit auf die Wischerwelle 22, die Druckfeder 34 zusammengedrückt wird und die Wischerwelle 22 axial nach außen verschoben wird.

An der Brücke 32 ist ein Mitnehmerstift parallel zur Wischerwelle 22, jedoch auf der Wischerwelle 22 abgewandten Seite der Brücke 32 als zweites Kupplungsteil 36, angeordnet. Dieser Mitnehmerstift ist starr in die Brücke 32 eingepreßt oder auf andere, im Stande der Technik bekannte Weise, befestigt. Zur Geräuschreduzierung kann dieser beispielsweise auch gummiummantelt oder in eine Kunststoffbuchse eingesetzt sein.

Im folgenden wird das Zusammenwirken von Antriebsteil 10 und Wischerteil 12 erläutert.

Das Wischerteil 12 ist typischerweise auf der Heckscheibe eines Kraftfahrzeuges angeordnet. Das Antriebsteil 10 ist in der Heckklappe selbst angeordnet. Die Heckscheibe ist mit Scharnieren versehen, so dass dieselbe zum Verschluß der Heckscheibenöffnung in der Heckklappe vorgesehen ist. Wird die Heckscheibe nun geschlossen, so greift das zweite Kupplungsteil 36 in die Öffnung des ersten Kupplungsteils 18 ein. Auf diese Weise wird das Drehmoment dann über das erste Kupplungsteil 18 und das zweite Kupplungsteil 36 übertragen.

Wurde die Wischerwelle 22 jedoch bei getrennter Kupplung, also dann wenn das erste Kupplungsteil 18 mit dem zweiten Kupplungsteil 36 nicht in Eingriff steht, bewegt, so ist der Metallbolzen des zweiten Kupplungsteils 36 nicht in der selben Position wie bei Trennung der Kupplungsteile 18, 36. In diesem Falle wird das zweite Kupplungsteil 36 auf der als Lochscheibe ausgebildeten ersten Kupplungsteils 18 aufsitzen. Beim vollständigen Zusammenführen von Wischerteil 12 und Antriebsteil 10 wird dann die Druckfeder 24 zusammengedrückt und die Wischerwelle 22 nach außen geschobe.

Durch die zusammengedrückte Druckfeder 34 wirkt eine axiale Kraft auf das zweite Kupplungsteil 36. Daher wird der Mitnehmerstift 36 auf die Lochscheibe 18 gepreßt. Beginnt das Antriebsteil 10 nun das erste Kupplungsteil 18 zu drehen, so dreht es sich unter dem zweiten Kupplungsteil 36 hinweg. Befindet sich die Öffnung 19 des ersten Kupplungsteils 18 unter dem zweiten Kupplungsteil 36 so schnappt dieses in die Öffnung 19 des ersten Kupplungsteil 18, wodurch die Kupplung hergestellt und das Drehmoment wieder auf die Wischerwelle 22 übertragen wird.

## Patentansprüche

1. Scheibenwischvorrichtung, insbesondere für ein Kraftfahrzeug, mit mindestens einem Antriebsteil (10), das ein erstes Kupplungsteil (18) aufweist und mindestens einem Wischerteil (12), das eine Wischerwelle (22) und einem Halter (20) trägt und ein zweites Kupplungsteil (36) aufweist, das im wesentlichen starr mit der Wischerwelle (22) verbunden ist, wobei das zweite Kupplungsteil (36) mit dem ersten Kupplungsteil (18) exzentrisch in Wirkverbindung, bringbar ist, **dadurch gekennzeichnet, dass** die Wischerwelle (22) in axialer Richtung am Halter (20) federelastisch gelagert ist.

2. Scheibenwischvorrichtung nach Anspruch 1, **dadurch gekennzeichnet, dass** das zweite Kupplungsteil (36) als im wesentlichen starres Element ausgebildet ist.

3. Scheibenwischvorrichtung nach einem der vorhergehenden Ansprüche, **dadurch gekennzeichnet, dass** das zweite Kupplungsteil (36) in das erste Kupplungsteil (18) einzudringen, insbesondere das erste Kupplungsteil (18) zu durchdringen vermag.

4. Scheibenwischvorrichtung nach einem der vorhergehenden Ansprüche, **dadurch gekennzeichnet, dass** das erste Kupplungsteil (18) als Lochscheibe ausgebildet ist.

5. Scheibenwischvorrichtung nach einem der vorhergehenden Ansprüche, **dadurch gekennzeichnet, dass** das erste und zweite Kupplungsteil (18, 36) durch Drehung des ersten Kupplungsteils (18) gegen das zweite Kupplungsteil (36) in Eingriff bringbar sind.

6. Scheibenwischvorrichtung nach einem der vorhergehenden Ansprüche, **dadurch gekennzeichnet, dass** das Antriebsteil (10) zum Antrieb der Wischerwelle (22) dient und sich selbst mit der Wischerwelle (22) in Wirkverbindung zu bringen vermag.

7. Scheibenwischvorrichtung nach einem der vorhergehenden Ansprüche, **dadurch gekennzeichnet, dass** das Antriebsteil (10) einen elektrischen Motor (14), insbesondere einen Reversiermotor aufweist.

8. Scheibenwischvorrichtung nach einem der vorhergehenden Ansprüche, **dadurch gekennzeichnet, dass** das Antriebsteil (10) an einer Heckklappe und das Wischerteil (12) an einer Heckscheibe des Kraftfahrzeugs befestigbar sind.

## Claims

1. Windscreen wiper device, in particular for a motor vehicle, with at least one driving part (10), which has a first coupling part (18), and at least one wiper part (12), which bears a wiper shaft (22) and a holder (20) and has a second coupling part (36) which is connected essentially rigidly to the wiper shaft (22), with it being possible for the second coupling part (36) to be brought eccentrically into operative connection with the first coupling part (18), **characterized in that** the wiper shaft (22) is mounted in the axial direction on the holder (20) with spring elasticity.

2. Windscreen wiper device according to Claim 1,
**characterized in that** the second coupling part (36) is designed as an essentially rigid element.

3. Windscreen wiper device according to one of the preceding claims, **characterized in that** the second coupling part (36) is capable of penetrating the first coupling part (18), in particular of penetrating through the first coupling part (18).

4. Windscreen wiper device according to one of the preceding claims, **characterized in that** the first coupling part (18) is designed as a perforated disc.

5. Windscreen wiper device according to one of the preceding claims, **characterized in that** the first and second coupling parts (18, 36) can be brought into engagement by rotation of the first coupling part (18) towards the second coupling part (36).

6. Windscreen wiper device according to one of the preceding claims, **characterized in that** the driving part (10) serves to drive the wiper shaft (22) and is capable of bringing itself into operative connection with the wiper shaft (22).

7. Windscreen wiper device according to one of the preceding claims, **characterized in that** the driving part (10) has an electric motor (14), in particular a reversing motor.

8. Windscreen wiper device according to one of the preceding claims, **characterized in that** the driving part (10) can be fastened to a tailgate and the wiper part (12) can be fastened to a rear window of the motor vehicle.

## Revendications

1. Dispositif d'essuie-glace notamment pour véhicule automobile comportant au moins une partie d'entraînement (10) munie d'une première partie d'accouplement (18) et d'au moins une partie d'essuie-glace (12) portant un axe d'essuie-glace (22) et un support (20) ainsi qu'une seconde partie d'accouplement (36) reliée d'une manière pratiquement rigide à l'axe d'essuie-glace (22),
la seconde partie d'accouplement (36) coopérant de manière excentrique avec la première partie d'accouplement (18),
**caractérisé en ce que**
l'axe d'essuie-glace (22) est monté de manière élastique comme un ressort dans la direction axiale au support (20).

2. Dispositif d'essuie-glace selon la revendication 1,
**caractérisé en ce que**
la seconde partie d'accouplement (36) est réalisée principalement comme un élément rigide.

3. Dispositif d'essuie-glace selon l'une des revendications précédentes,
**caractérisé en ce que**
la seconde partie d'accouplement (36) peut pénétrer dans la première partie d'accouplement (18), notamment traverser la première partie d'accouplement (18).

4. Dispositif d'essuie-glace selon l'une des revendications précédentes,
**caractérisé en ce que**
la première partie d'accouplement (18) est en forme de disque à trou.

5. Dispositif d'essuie-glace selon l'une quelconque des revendications précédentes,
**caractérisé en ce que**
la première et la seconde partie d'accouplement (18, 36) sont mises en prise par rotation de la première partie d'accouplement (18) par rapport à la seconde partie d'accouplement (36).

6. Dispositif d'essuie-glace selon l'une des revendications précédentes,
**caractérisé en ce que**
la partie d'entraînement (12) sert à l'entraînement de l'axe d'essuie-glace (22) et se met d'elle-même en coopération avec l'axe d'essuie-glace (22).

7. Dispositif d'essuie-glace selon l'une quelconque des revendications précédentes,
**caractérisé en ce que**
la partie d'entraînement (10) comporte un moteur électrique (14), notamment un moteur réversible.

8. Dispositif d'essuie-glace selon l'une quelconque des revendications précédentes,
**caractérisé en ce que**
la partie d'entraînement (10) est fixée à un capot arrière et la partie d'essuyage (12) est fixée à la lunette arrière du véhicule automobile.
